# FASCICULE DE BREVET EUROPEEN

(11) **EP 1 844 250 B1**
(45) Date de publication et mention de la délivrance du brevet: **24.12.2008**
(21) Numéro de dépôt: 05717689.3
(22) Date de dépôt: 27.01.2005
(51) Int. Cl.: F16H 47/06, F16H 37/04, F16H 3/091

(54) **BOITE DE VITESSE POUR CHARIOT ELEVATEUR A FLECHE TELESCOPIQUE, ET ENGIN EQUIPE D'UNE TELLE BOITE DE VITESSE**
GETRIEBE FÜR GABELSTAPLER MIT TELESKOPAUSLEGER UND DAMIT AUSGESTATTETE MASCHINE
GEARBOX FOR LIFT TRUCK WITH TELESCOPIC JIB, AND MACHINE EQUIPPED WITH SAME

(43) Date de publication de la demande: 17.10.2007
(73) Titulaire: VOLVO COMPACT EQUIPMENT SAS, 01300 Belley (FR)
(72) Inventeur: TREMBLAIS, Sébastien, F-73370 La Chapelle Du Mont Du Chat (FR)
(74) Mandataire: Putet, Gilles
(86) Numéro de dépôt international: PCT/FR2005/050050
(87) Numéro de publication internationale: WO 2006/079696

(56) Documents cités:
- FR-A- 2 603 234
- US-A1- 2001 014 277
- US-A1- 2002 042 852
- US-A1- 2004 138 800

## Description

### Domaine technique

L'invention se rattache au domaine des véhicules industriels, du type chariot élévateur à flèche télescopique. Elle vise plus particulièrement une architecture de la boîte de vitesse équipant de tels engins, en vue d'en diminuer l'encombrement, avec des conséquences favorables sur la structure générale de l'engin.

### Techniques antérieures

De manière générale, les chariots élévateurs à flèche télescopique comportent deux essieux supportant un châssis supportant lui-même le moteur thermique, la mécanique de transmission, la flèche télescopique qui s'étend longitudinalement, ainsi que le poste de conduite.

Des contraintes de manoeuvrabilité et d'ergonomie imposent le dimensionnement et le positionnement des différents organes composant l'engin.

Ainsi, on recherche pour un chariot élévateur une manoeuvrabilité optimisée, ce qui se traduit par la réduction de la distance entre les essieux avant et arrière. Ainsi, on considère qu'un engin doit présenter un empattement entre l'essieu avant et arrière qui est inférieur à 2,60 mètres, pour permettre son évolution dans tout type de chantier, avec une capacité d'effectuer des manoeuvres dans des zones de travail étroites.

La réduction des distances entre les essieux avant et arrière limite le volume disponible dans la partie basse du châssis qui est occupé par le moteur thermique, la boîte de vitesse assurant la transmission aux essieux, et le circuit hydraulique permettant de manoeuvrer la flèche télescopique, ainsi que le circuit de refroidissement associé.

Le volume occupé par ces différents organes ne doit pas s'étendre exagérément vers le haut, dans l'espace qui est occupé par la flèche télescopique. En effet, pour des raisons de stabilité, la flèche télescopique est généralement installée en partie centrale de l'engin, et s'étend longitudinalement. Le poste de conduite est situé d'un côté de cette flèche télescopique, et il est important pour des raisons de sécurité que le conducteur ait un champ de vision le plus dégagé possible sur tout l'environnement du véhicule.

Il importe en effet qu'il puisse avoir une vision permanente sur la charge, et ce quel que soit le déplacement de la flèche. Lors du déplacement du véhicule, le conducteur doit également avoir une bonne visibilité sur la partie arrière du véhicule, au-delà du point de pivot de la flèche par rapport au châssis, et il est également très important que le conducteur ait une visibilité latérale, du côté opposé de la flèche par rapport à l'emplacement de la cabine.

C'est pourquoi il importe que la flèche ne se situe pas à une hauteur trop élevée par rapport au châssis, au risque de gêner sa visibilité latérale. On conçoit également que ce type de véhicule est destiné à évoluer sur des terrains accidentés, et qu'une garde au sol minimum est nécessaire, de l'ordre de 400 millimètres.

Différentes solutions ont d'ores et déjà été proposées pour agencer le moteur thermique, la boîte de vitesse et le système de refroidissement associé. En effet, le moteur thermique occupe un volume important dans la mesure où il est destiné à développer une puissance de l'ordre de 100 chevaux ou supérieur.

Parmi les solutions existantes connues, on connaît celle décrite dans le brevet générique US 6 668 964 qui consiste à monter le moteur thermique de façon transversale. De la sorte, le moteur s'étend principalement dans un sens transversal, et n'occupe qu'un volume limité dans le sens longitudinal. Un système de renvoi d'angle permet de transmettre le couple développé par le moteur à une boîte de vitesse centrale, elle-même reliée aux essieux avant et arrière par deux arbres à cardan. La boîte de vitesse équipant ce type d'engin est de type traditionnel, et comporte donc deux dispositifs d'embrayage sur l'arbre d'entrée de la boite, qui sont actionnés alternativement selon que l'engin doit se déplacer en marche avant ou en marche arrière. On conçoit que l'emploi de deux mécanismes d'embrayage distincts sur le même arbre d'entrée augmente le volume global de la boîte de vitesse.

D'autres solutions ont été proposées dans lesquelles le moteur thermique n'est pas implanté de façon transversale, mais au contraire longitudinale. Dans ce cas, la boîte de vitesse se trouve dans le prolongement du moteur thermique, en sortie de ce dernier. On connait également la solution décrite dans le brevet US2002/0042852, comportant un ensemble marche avant/marche arrière à dispositif synchronisateur.

Les solutions lesquelles le moteur thermique, la boîte de vitesse et l'entraînement des pompes hydrauliques sont disposées dans le même alignement sont incompatibles avec l'empattement réduit évoqué ci-avant, pour des niveaux de puissance évoqués de l'ordre de 100 chevaux et plus.

Une autre solution consiste à remplacer la boite de vitesse par une pompe hydraulique qui est elle-même connectée hydrauliquement à un moteur hydraulique. Ce moteur transmet le couple mécanique aux ponts; par une transmission dite "hydrostatique". Le coût d'une transmission hydrostatique est un inconvénient en défaveur de ce type de solution.

### Exposé de l'invention

Un des objectifs de l'invention est donc de proposer une nouvelle structure de boîte de vitesse qui permette l'emploi d'un moteur longitudinal sans augmenter trop fortement la longueur de l'ensemble moteur thermique, boîte de vitesse et entraînement des pompes hydrauliques, pour conserver à un niveau d'empattement limité, entre les essieux avant et arrière et typiquement inférieur à 2,60 m.

Un autre objectif de invention est de limiter le volume de cet ensemble de manière à pouvoir disposer la flèche télescopique à une hauteur limitée, ne gênant pas la visibilité notamment latérale.

Un autre objectif de l'invention est d'éviter l'utilisation d'une transmission de puissance hydrostatiques et conserver une transmission mécanique, plus économique à performances équivalentes.

L'invention concerne donc une boîte de vitesse pour chariot élévateur à flèche télescopique, qui comporte en entrée un convertisseur de couple, et un arbre de sortie.

Conformément à l'invention, cette boîte de vitesse se caractérise en ce qu'elle comporte :
■ Un arbre d'entrée de boite, dit arbre primaire, relié au convertisseur de couple, et sur lequel est positionné un mécanisme d'embrayage;
■ un arbre secondaire entraîné en rotation par le mécanisme d'embrayage ;
■ deux pignons, à savoir un premier et un second pignons, montés en libre rotation sur l'arbre secondaire, et aptes à être entraînés tour à tour avec ce dernier en fonction du déplacement d'un dispositif synchronisateur ;
■ un arbre tertiaire accouplé avec l'arbre secondaire par le premier pignon et un pignon inverseur entraîné par le second pignon, l'arbre tertiaire comportant une pluralité de pignons d'accouplement avec l'arbre de sortie, en fonction du rapport de transmission souhaité.

Autrement dit, la boîte de vitesse conforme à l'invention ne comporte qu'un seul mécanisme d'embrayage, en opposition avec les boîtes de vitesse existantes qui comportent deux mécanismes d'embrayage, à savoir un premier pour la transmission en marche avant et un second pour la transmission en marche arrière.

Conformément à l'invention, la sélection entre la marche arrière et la marche avant s'effectue en aval du seul mécanisme d'embrayage, grâce à la sélection de la transmission du couple par l'un des deux pignons disposés sur l'arbre secondaire entraîné par le mécanisme d'embrayage. La présence d'un seul mécanisme d'embrayage diminue fortement l'encombrement global de la boîte de vitesse, et permet donc son implantation en sortie longitudinale du moteur et en libérant donc un volume utilisable par d'autres organes du véhicule, sans nécessiter d'augmenter ni l'empattement ni la hauteur de la flèche télescopique.

Ainsi, le dispositif synchronisateur permet en fonction de la commande de sens de direction, d'entraîner le premier ou le second pignon avec l'arbre secondaire. Selon que c'est le premier ou le second pignon qui est entraîné par l'arbre secondaire, l'arbre tertiaire tourne dans un sens ou dans l'autre. En effet, l'entraînement en marche avant de l'arbre tertiaire se fait directement à partir du premier pignon, tandis qu'en marche arrière le second pignon entraîne un pignon inverseur, lui-même engrenant l'arbre tertiaire.

La commande du déplacement des dispositifs synchronisateurs situés sur l'arbre secondaire peut être coordonnée avec la commande du mécanisme d'embrayage, ce qui permet de stopper la transmission du couple moteur lors du changement de direction, et ce pendant la période nécessaire à la synchronisation et à l'accouplement mécanique de l'arbre secondaire et de l'arbre tertiaire.

En pratique, les dispositifs synchronisateurs situés sur l'arbre secondaire peuvent être commandés préférentiellement de manière électro-hydraulique, de manière à lier la commande électrique du mécanisme d'embrayage au mécanisme de changement de sens de rotation.

Selon une autre caractéristique de l'invention, l'arbre de sortie de la boîte de vitesse peut être relié à une boîte de transfert, destinée à être connectée à au moins un des arbres de transmission du véhicule. Cette boîte de transfert permet de décaler transversalement la sortie du système de sélection du rapport de transmission, pour l'aligner autant que faire se peut avec l'axe longitudinal de la machine. On limite ainsi les angles imposés au niveau des cardans de liaison des arbres de transmission avec la sortie de la boîte de transfert.

Selon une autre caractéristique de l'invention, le convertisseur de couple peut avantageusement présenter un arbre creux, qui est traversé par un arbre d'entraînement d'une prise de force. Cette prise de force peut avantageusement être connectée à une pompe hydraulique, et en particulier la pompe assurant la mise sous pression du circuit hydraulique principale du véhicule responsable de la manoeuvre de la flèche télescopique.

### Description sommaire des figures

La manière de réaliser l'invention, ainsi que les avantages qui en découlent ressortiront bien de la description du mode de réalisation qui suit, à l'appui des figures annexées dans lesquelles :
Les figures 1 et 2 sont des vues de côté respectivement de droite et de gauche d'un chariot élévateur à fourche télescopique conforme à l'invention.
La figure 3 est une vue de dessus de l'ensemble moteur/boîte de vitesse/pompe hydraulique/système de refroidissement équipant l'engin de la figure 1.
La figure 4 est une vue en coupe transversale de l'engin de la figure 1, au niveau de l'avant du compartiment moteur.
La figure 5 est une vue en perspective schématique de la boîte de vitesse équipant l'engin de la figure 1.
La figure 6 est un schéma de la chaîne cinématique de la boîte de vitesse de la figure 3.

### Manière de réaliser l'invention

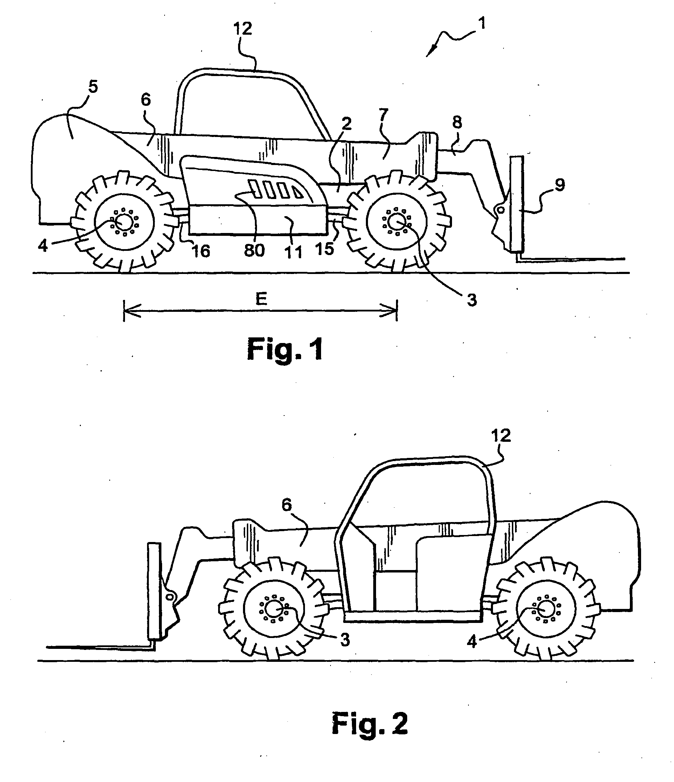

De façon générale, le chargeur élévateur à flèche télescopique (1) illustré à la figure 1 comporte un châssis (2) reposant sur les deux essieux avant (3) et arrière (4). Le châssis (2) reçoit en partie arrière le pivot (5) d'une flèche télescopique (6) constituée de différents éléments (7, 8) se terminant par un porte-outil (9).

La flèche télescopique (6) se trouve sensiblement en partie centrale du véhicule, et est bordée d'un côté par un capotage du compartiment moteur (11), et de l'autre côté par un poste de conduite (12).

Pour assurer la fonction de locomotion du véhicule, le couple délivré par le moteur situé dans le compartiment moteur (11) est transmis aux essieux (3, 4) par l'intermédiaire d'arbres de transmission (15, 16).

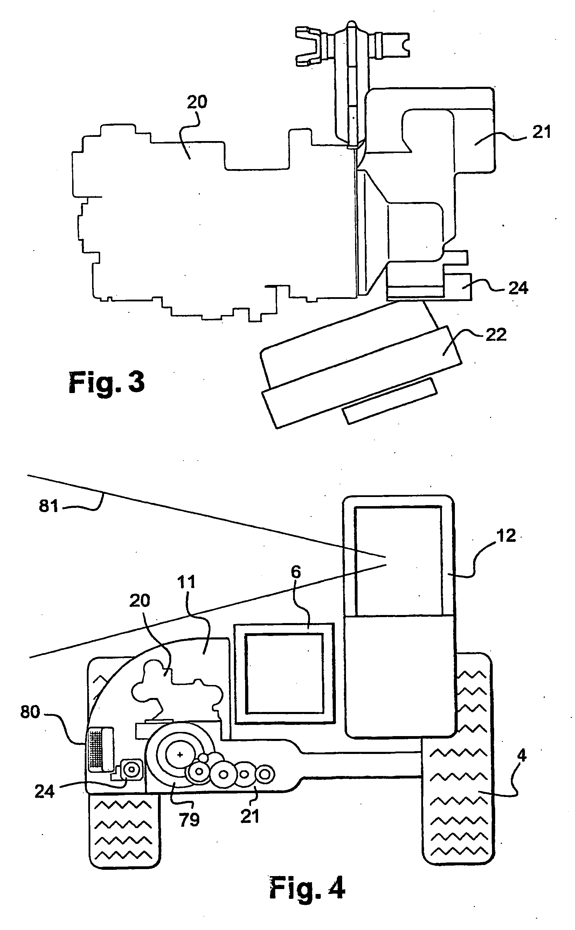

Plus précisément, comme illustré à la figure 3, le compartiment moteur (11) comporte de façon principale un moteur thermique (20) associé à une boîte de vitesse (21) ainsi qu'un système de refroidissement (22) du moteur thermique (20). Dans ce même compartiment se trouve la pompe hydraulique (24) du système hydraulique de manoeuvre de la flèche télescopique (6).

Comme déjà évoqué, l'invention consiste dans la conception compacte de la boîte de vitesse (21) qui permet de réduire l'encombrement du compartiment moteur, et d'agencer ce dernier de manière optimale pour ne pas gêner la visibilité.

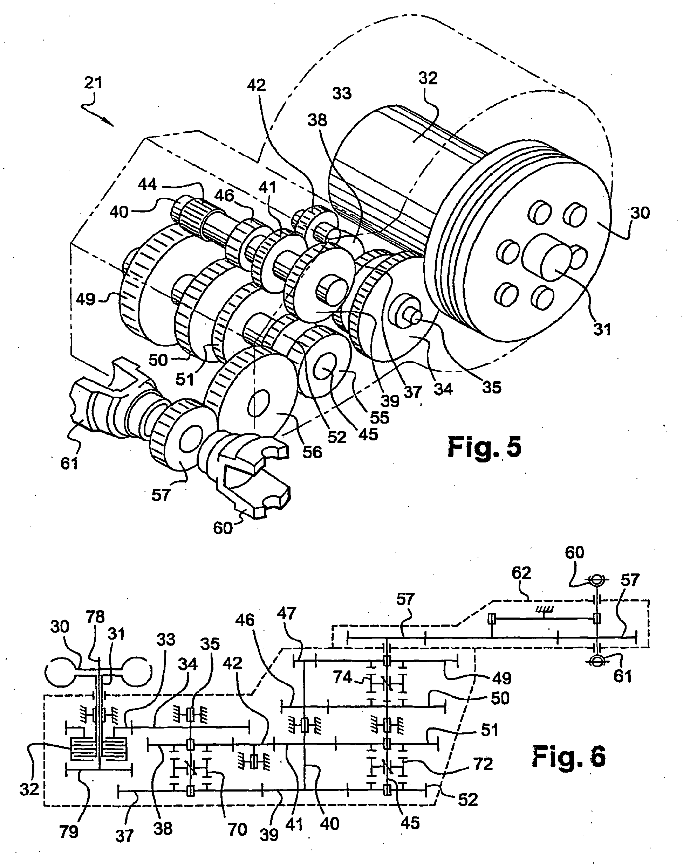

Plus précisément, et comme illustré à la figure 5, la boîte de vitesse (21) comprend en entrée un convertisseur de couple (30) présentant un arbre creux (31), et relié à l'arbre de sortie du moteur (20).

L'arbre primaire, situé en sortie du convertisseur de couple, est relié à un mécanisme ou "pack" d'embrayage (32). Ce pack d'embrayage (32) comporte un pignon de sortie (33) qui vient engrener le pignon principal (34) d'un arbre secondaire (35). Le premier pignon (37) et le second pignon (38) sont montés en libre rotation sur cet arbre secondaire (35).

Le premier pignon (37) engrène un pignon (39) de l'arbre tertiaire (40). Un autre pignon (41) de l'arbre tertiaire (40) est engrené par un pignon inverseur (42), lui-même engrené par le second pignon (38) de l'arbre secondaire (35).

Cet arbre tertiaire (40) comporte plusieurs autres pignons (46, 47) destinés à engrener des pignons complémentaires (49, 50, 51, 52) de l'arbre de sortie (45).

L'arbre de sortie est connecté à un sous-ensemble formant une boîte de transfert (62) incluant trois pignons (55, 56, 57) permettant de décaler la sortie de la boîte de vitesse à proximité du centre du véhicule, et afin de transmettre un couple aux arbres de transmission (15, 16) par l'intermédiaire des cardans (60, 61).

Plus précisément, et comme illustré à la figure 6, les premier et second pignons (37, 38) peuvent être accouplés à l'arbre secondaire (35) par le biais d'un dispositif de synchronisation (70) monté en liaison glissière par rapport à l'arbre (35), et déplaçable le long de cet arbre (35). En fonction de son déplacement, le dispositif de synchronisation (70), peut venir engrener soit le premier pignon (37), soit le second pignon (38), et ainsi transmettre au pignon considéré le mouvement de rotation de l'arbre (35).

Conformément à l'invention, la commande du déplacement de ce dispositif synchronisateur (70) s'effectue de manière électro-hydraulique, c'est-à-dire avec une commande électrique agissant sur un dispositif hydraulique provoquant le déplacement du dispositif (70). Cette commande électrique est synchronisée avec la commande du pack d'embrayage (32), de manière à stopper la transmission du couple en provenance du moteur lorsqu'un changement de direction est souhaité.

La commande de l'embrayage et celle du dispositif synchronisateur (70) peuvent être déclenchées par une même information de nature électrique, engendrée par le déplacement d'un interrupteur ou d'un manipulateur spécifique au niveau du poste de conduite, pour le passage de marche avant en marche arrière, ou inversement.

La boîte de vitesse est également équipée au niveau de son arbre de sortie de dispositifs synchronisateurs supplémentaires (72, 74), montés en liaison glissière sur l'arbre de sortie (45), et aptes à coupler l'arbre de sortie (45) à l'un des pignons (49-52) monté en libre rotation sur ce dernier.

La commande de ces deux dispositifs synchronisateurs (72, 74) de l'arbre de sortie peut s'effectuer de diverses manières, soit de façon mécanique sous l'action d'un levier de vitesse accessible au niveau de la cabine de conduite et associé à une tringlerie, ou bien encore de manière électro-hydraulique ou électrique.

De la même manière que pour le dispositif synchronisateur (70) de l'arbre secondaire, la commande des dispositifs synchronisateurs (72,74) de l'arbre de sortie peuvent déclencher la rupture de la transmission du couple moteur par le pack d'embrayage (32).

Selon une autre caractéristique de l'invention, le convertisseur de couple (30) présente un arbre creux (31) à l'intérieur duquel est disposé un arbre (78) directement donc entraîné par le moteur thermique. Cet arbre d'entraînement (78) présente à son autre extrémité un pignon (79) qui peut être reliée comme illustrée à la figure 4 à la pompe hydraulique (24). Cette pompe est donc disposée à proximité directe de la boîte de vitesse. Comme déjà évoqué, cette pompe principale (24) assure la distribution du fluide permettant la manipulation de la flèche télescopique (6).

La pompe (24) peut être disposée comme illustrée à la figure 4 sur un côté du moteur de manière suffisamment basse pour être au-dessous du niveau d'huile du réservoir hydraulique (non représenté). De cette manière, le fonctionnement de la pompe se fait avec un gavage permanent, ce qui améliore sa fiabilité. Ce positionnement est également avantageux en terme d'encombrement, puisque la pompe se trouve par rapport au moteur au même niveau que la boîte de vitesse, et non pas dans son prolongement, ce qui aurait des conséquences négatives sur l'empattement minimum de l'engin.

Par ailleurs, grâce à cette position, la pompe peut être facilement accessible depuis l'extérieur, puisqu'elle se trouve directement à proximité du capotage du compartiment moteur (11), pour les opérations de maintenance.

Il est également possible de positionner la pompe au-dessus du niveau de la boîte de vitesse, grâce à un mécanisme de renvoi d'angle, dans les cas où la largeur du compartiment moteur ne permet pas le positionnement de la pompe hydraulique.

On notera comme illustré aux figures 3 et 4, que l'encombrement réduit de l'ensemble moteur/boîte de vitesse permet l'implantation d'un dispositif de refroidissement (22) légèrement incliné latéralement afin de bénéficier des entrées d'air (80) présentes au niveau du capotage et du compartiment moteur (11). De façon générale, et comme illustrée à la figure 4, la compacité de la boite de vitesse conforme à invention permet d'optimiser le volume occupé par le compartiment moteur, de manière à ce que ce dernier ne dépasse pas en hauteur de la flèche (6). Ceci permet de au conducteur de conserver un champ de vision (81) qui n'est pas perturbé par le compartiment moteur (11), tout en bénéficiant d'une garde au sol suffisante, et un empattement compatible avec des usages en chariot dit "compact".

## Revendications

1. Boîte de vitesse (21) pour chariot élévateur (1) à flèche télescopique (6), comportant un convertisseur de couple (30) en entrée, un arbre de sortie (45);
■ un arbre d'entrée, dit arbre primaire, relié au convertisseur de couple (30), et sur lequel est positionné un mécanisme d'embrayage (32) ;
■ un arbre secondaire (35) entraîné en rotation par un pignon de sortie (33) du mécanisme d'embrayage (32) qui vient engrener un pignon principal (34) de l'arbre secondaire (35) ;
**caractérisée en ce qu'**elle comporte :
■ deux pignons, à savoir un premier (37) et un second (38) pignons, montés en libre rotation sur l'arbre secondaire (35), et aptes à être entraînés tour à tour avec ce dernier en fonction du déplacement d'un dispositif synchronisateur (70);
■ un arbre tertiaire (40) accouplé avec l'arbre secondaire (35) par le premier pignon (37) et un pignon inverseur (42) entraîné par le second pignon (38), l'arbre tertiaire (40) comportant une pluralité de pignons (39,41,46,47) d'accouplement avec l'arbre de sortie (45), en fonction du rapport de transmission souhaité.

2. Boîte selon la revendication 1, **caractérisée en ce que** la commande du déplacement des dispositifs synchronisateurs (70) situés sur l'arbre secondaire (35) est coordonnée avec la commande du mécanisme d'embrayage (32).

3. Boîte selon la revendication 2, **caractérisée en ce que** les dispositifs synchronisateurs (70) situés sur l'arbre secondaire (35) sont commandés électro-hydrauliquement.

4. Boîte selon la revendication 2, **caractérisée en ce que** l'arbre de sortie (45) est relié à une boîte de transfert (62) destinée à être connectée à au moins un arbre de transmission (15, 16).

5. Boîte selon la revendication 2, **caractérisée en ce que** le convertisseur de couple (30) présente un arbre creux (31) traversé par un arbre (78) d'entraînement d'une prise de force.

6. Boîte selon la revendication 5, **caractérisée en ce que** la prise de force est connectée à l'arbre d'entraînement d'une pompe hydraulique (24).

7. Engin du type chariot élévateur (1) à flèche télescopique, comportant une boîte de vitesse (21) selon l'une des revendications 1 à 6.

## Claims

1. A gearbox (21) for a lift truck (1) with a telescopic jib (6), comprising a torque converter (30) on the input side, an output shaft (45),
■ An input shaft, termed primary shaft, connected to the torque converter (30) and on which a clutch mechanism (32) is positioned;
■ A secondary shaft (35) rotationally driven by an output pinion (33) of the clutch mechanism (32) that engages a main pinion (34) of the secondary shaft (35),
**characterized in that** it comprises:
■ Two pinions, namely a first pinion (37) and a second pinion (38), mounted to freewheel on the secondary shaft (35) and able to be driven in turn with this shaft according to the movement of a synchronizer device (70) ;
■ A tertiary shaft (40) coupled with the secondary shaft (35) by the first pinion (37) and a reversing pinion (42) driven by the second pinion (38), the tertiary shaft (40) comprising a plurality of pinions (39, 41, 46, 47) for coupling with the output shaft (45) according to the desired transmission ratio.

2. The gearbox as claimed in claim 1, **characterized in that** the control of the movement of the synchronizer devices (70) situated on the secondary shaft (35) is coordinated with the control of the clutch mechanism (32).

3. The gearbox as claimed in claim 2, **characterized in that** the synchronizer devices (70) situated on the secondary shaft (35) are controlled electrohydraulically.

4. The gearbox as claimed in claim 2, **characterized in that** the output shaft (45) is connected to a transfer box (62) intended to be connected to at least one transmission shaft (15, 16).

5. The gearbox as claimed in claim 2, **characterized in that** the torque converter (30) has a hollow shaft (31) traversed by a drive shaft (78) of a power take-off.

6. The gearbox as claimed in claim 5, **characterized in that** the power take-off is connected to the drive shaft of a hydraulic plump (24).

7. A machine of the type consisting of a lift truck (1) with a telescopic jib, comprising a gearbox (21) as claimed in one of claims 1 to 6.

## Patentansprüche

1. Getriebe (21) für Gabelstapler (1) mit Teleskopausleger (6), welches einen Drehmomentwandler (30) am Eingang, eine Abtriebswelle (45),
■ eine mit dem Drehmomentwandler (30) verbundene Eingangswelle, die Primärwelle genannt wird und auf der ein Kupplungsmechanismus (32) positioniert ist, und
■ eine Sekundärwelle (35) umfasst, die durch ein Abtriebsritzel (33) des Kupplungsmechanismus (32) in Drehung versetzt wird, das in ein Hauptritzel (34) der Sekundärwelle (35) eingreift,
**dadurch gekennzeichnet, dass** es
■ zwei Ritzel, nämlich ein erstes Ritzel (37) und ein zweites Ritzel (38), die in freier Drehung auf der Sekundärwelle (35) angeordnet sind und abwechselnd mit der Letzteren abhängig von der Verschiebung einer Synchronisiervorrichtung (70) antreibbar sind,
■ eine Tertiärwelle (40) aufweist, die mit der Sekundärwelle (35) durch das erste Ritzel (37) und ein von dem zweiten Ritzel (38) angetriebenes Umkehrritzel (42) gekoppelt ist, wobei die Tertiärwelle (40) eine Vielzahl von Ritzeln (39, 41, 46, 47) zum Kuppeln mit der Abtriebswelle (45) abhängig vom gewünschten Übersetzungsverhältnis umfasst.

2. Getriebe nach Anspruch 1, **dadurch gekennzeichnet, dass** die Steuerung der Verschiebung der auf der Sekundärwelle (35) befindlichen Synchronisiervorrichtungen (70) mit der Steuerung des Kupplungsmechanismus (32) koordiniert ist.

3. Getriebe nach Anspruch 2, **dadurch gekennzeichnet, dass** die auf der Sekundärwelle (35) befindlichen Synchronisiervorrichtungen (70) elektrohydraulisch gesteuert sind.

4. Getriebe nach Anspruch 2, **dadurch gekennzeichnet, dass** die Abtriebswelle (45) mit einem Verteilergetriebe (62) verbunden ist, das dazu bestimmt ist, mit mindestens einer Transmissionswelle (15, 16) verbunden zu werden.

5. Getriebe nach Anspruch 2, **dadurch gekennzeichnet, dass** der Drehmomentwandler (30) eine Hohlwelle (31) aufweist, die von einer Antriebswelle (78) einer Zapfwelle durchquert wird.

6. Getriebe nach Anspruch 5, **dadurch gekennzeichnet, dass** die Zapfwelle mit der Antriebswelle einer Hydraulikpumpe (24) verbunden ist.

7. Maschine vom Typ eines Gabelstaplers (1) mit Teleskopausleger, welche ein Getriebe (21) nach einem der Ansprüche 1 bis 6 aufweist.
